# EUROPEAN PATENT APPLICATION

(11) **EP 2 869 426 A1**
(43) Date of publication of application: **06.05.2015**
(21) Application number: 14190936.6
(22) Date of filing: 29.10.2014
(51) Int. Cl.: H02J 3/38, H01H 9/54, H02J 3/24

(54) **Power generation system and method with fault ride through capability**

(30) Priority: 29.10.2013 US 201314065702
(71) Applicant: General Electric Company, Schenectady, New York 12345 (US)
(72) Inventor: Panosyan, Ara, Niskayuna, NY New York 12309 (US); El-Barbari, Said Farouk Said, Niskayuna, 12309 (US); Schroeder, Stefan, Niskayuna, NY New York 12309 (US)
(74) Representative: Cleary, Fidelma

(57) **Abstract**

A power generation system (40) includes a generator (42) mechanically coupled to an engine (60) to generate electrical power and a fault ride through system (46) connected between the generator (42) and a power grid (44). The fault ride through system (46) includes a mechanical switch (54) connected in parallel with a solid state switch (52) and a resistor (53) to absorb power from the generator (42) during a grid fault condition. The mechanical switch (54) and the solid state switch (52) are controlled in coordination with the engine (60).

## Description

### BACKGROUND

This invention relates generally to electric energy conversion, and, more specifically, to a system and a method for fault ride through capability of small generator sets with low moments of inertia connected to an electric power grid.

In traditional electric power systems, most of the electrical power is generated in large centralized facilities, such as fossil fuel (coal, gas powered), nuclear, or hydropower plants. These traditional plants have excellent economies of scale but usually transmit electricity long distances and can affect the environment. Distributed energy resource (DER) systems are small power generator sets (typically in the range of 3 kW to 10,000 kW) used to provide an alternative to or an enhancement of traditional electric power systems. Small power generator sets may be powered by gas engines, diesel engines or wind turbines, for example. DER systems reduce the amount of energy lost in transmitting electricity because the electricity is generated very close to where it is used. DER systems also reduce the size and number of power lines that must be constructed. However, due to increased trend towards distributed power generation using small generator sets, many grid codes are requiring small generator sets to provide enhanced capabilities such as fault voltage ride through.

When a fault in the electric power system occurs, voltage in the system could drop by a significant amount for a short duration (typically less than 500 milliseconds) until the fault is cleared. Faults can be caused by at least one phase conductor being connected to ground (a ground fault) or by the short circuiting of two or multiple phase conductors. These types of faults can occur during lightning and wind storms, or due to a transmission line being connected to the ground by accident. The fault may result in significant voltage drop events. In the past, under these inadvertent fault and large power disturbance circumstances, it has been acceptable and desirable for small generator sets to trip off line whenever the voltage drop occurs. Operating in this way has no real detrimental effect on the supply of electricity when penetration level of small power generator sets is low. However, as penetration of small generator sets in the electric power system increases, it is desirable for these small generator sets to remain on line and ride through such a low voltage condition and to stay synchronized with the electric grid, to be able to continue supplying power to the grid after the fault is cleared. This is similar to the requirements applied to larger power generator sets.

Therefore, it is desirable to determine a method and a system that will address the foregoing issues.

### BRIEF DESCRIPTION

In accordance with an embodiment of the present technique, a power generation system is provided. The power generation system includes a generator mechanically coupled to an engine to generate electrical power. The power generation system also includes a fault ride through system connected between the generator and a power grid. The fault ride through system includes a mechanical switch connected in parallel with a solid state switch and a resistor to absorb power from the generator during a grid fault condition. In the power generation system, the mechanical switch and the solid state switch are controlled in coordination with the engine.

In accordance with another embodiment of the present technique, a method of supplying electrical power to a power grid from a power generation system is provided. The power generation system includes a fault ride through system connected between a generator and the power grid and including a resistor connected in parallel with a mechanical switch and a solid state switch. The method includes controlling the mechanical switch to open when a fault is detected and to close the mechanical switch if the fault is cleared after a predetermined time. The method also includes providing a bypass path for a generator current via the solid state switch or the resistor after the mechanical switch is opened and before the predetermined time and controlling ignition of an engine in coordination with the solid state switch.

### DRAWINGS

These and other features, aspects, and advantages of the present invention will become better understood when the following detailed description is read with reference to the accompanying drawings in which like characters represent like parts throughout the drawings, wherein:
FIG. 1 is a plot of a grid code defined voltage profile right before, during and right after a fault;
FIG. 2 is a diagrammatical representation of a power generation system connected to an electric power grid and utilizing a fault ride through system according to aspects of the present disclosure; and
FIGs. 3(a)-3(f) are diagrammatical representations of various stages of fault ride through operation according to aspects of the present disclosure.

### DETAILED DESCRIPTION

As discussed in detail below, embodiments of the present invention function to provide a system and a method for fault ride through capability of small power generator sets with low moments of inertia connected to a power grid.

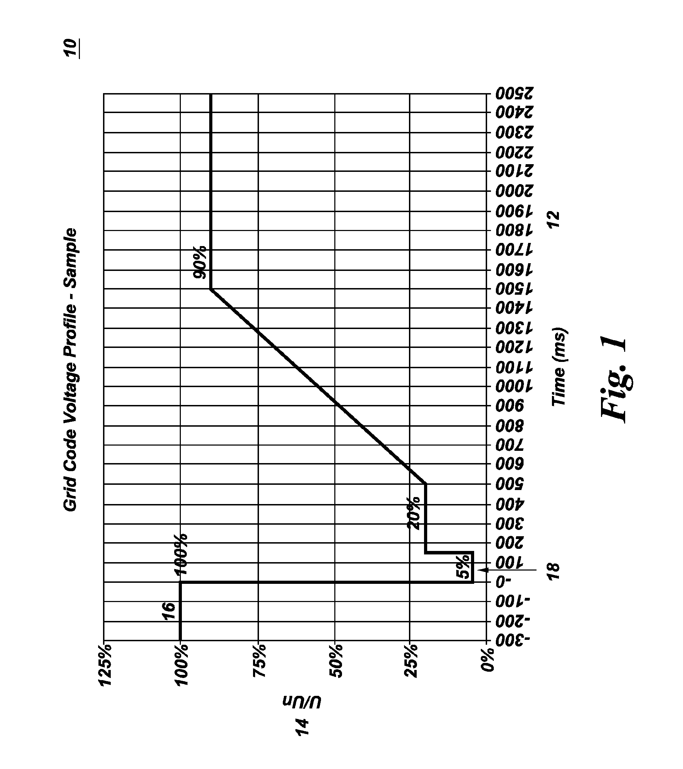

FIG. 1 illustrates a plot 10 of an example of a grid code voltage profile at the point of connection (POC) of a generator to the power grid. Some of the grid authorities expect that the generators should not be disconnected from the grid if the voltage at POC is higher than the voltage profile shown. However, this is one exemplary case, and the voltage profile requirement may vary from country to country or from grid authority to grid authority. The plot 10 shows a horizontal axis 12 representing time in milliseconds and a vertical axis 14 representing voltage in percentage of the nominal voltage. The fault occurs at 0 milliseconds. Before the fault, the system is in stable condition, so the pre-fault voltage 16 at POC i.e. before 0 milliseconds is 100% or 1 per unit. Due to a fault in the grid, the voltage 18 at 0 milliseconds drops down to as low as 5% at the beginning of the fault. It should be noted that the voltage drop at the POC depends on the distance of fault to POC, the fault impedance, the type of fault, the grid characteristics and so forth. In one embodiment, the voltage may be lower than 5 %, or in another embodiment; the voltage may be greater than 5%.

When the voltage falls to levels as illustrated in FIG. 1, it is likely that the generator is not able to export full power to the grid during the low voltage condition. If, at the same time, the prime mover continues to deliver constant mechanical power to the generator, this will result in acceleration of the engine-generator rotating masses, and the rotor speed will increase. The increase of the rotor speed will result in excessive increase of the synchronous generator rotor angle, which may lead a loss of synchronism. Therefore, the generator will trip and not fulfill the grid code requirement. In certain countries, the grid code requirements may be stringent and the generator may need to ride through longer fault duration. In accordance with an embodiment of the present technique, a fault voltage ride through system employing a solid state switch in combination with a resistor and engine control is disclosed to address the foregoing issue.

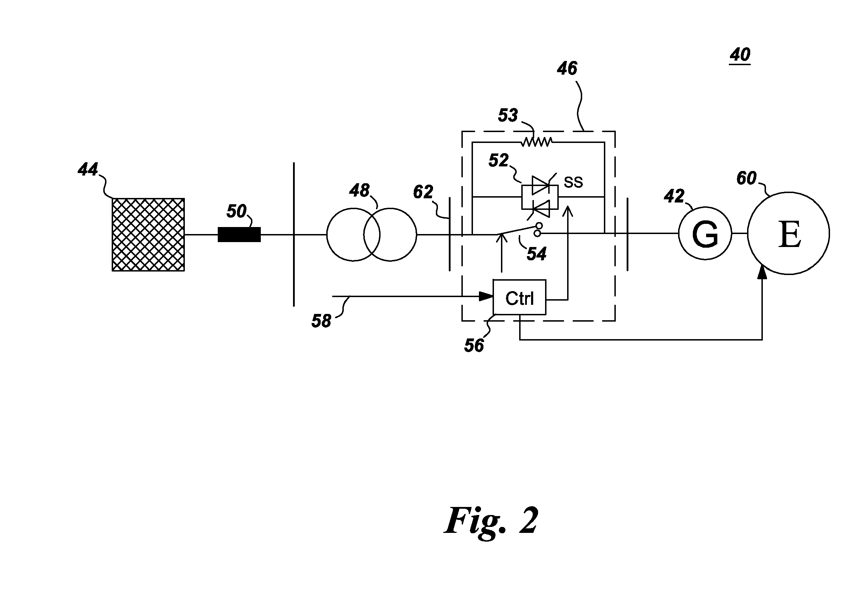

FIG. 2 shows a power generation system 40 connected to an electric power grid 44 utilizing a fault ride through system 46 in accordance with an embodiment of the present invention. Power generation system 40, comprises a prime mover 60 and a generator 42 which is connected to the power grid 44. In one embodiment, generator 42 is of a small power rating for example, less than 10 MW. Further, the generator is mechanically coupled to prime mover 60, which could be a turbine or engine. In one embodiment, engine 60 comprises a gas turbine or a gas engine or a wind turbine. In some embodiments, generator 42 will be coupled to power grid 44 through a power electronic converter (not shown), and in other embodiment generator 42 will be coupled to power grid 44 without any power electronic converter. Generator 42 may be connected to power grid 44 via fault ride through system 46, a transformer 48, and a transmission line 50. It should be noted that the arrangement shown in FIG. 2 is only for exemplary purpose and in another embodiment; fault ride through system 46 may be connected between transformer 48 and power grid 44. It should be noted that the FIG. 2 shows a single line diagram of the electric system for ease of illustration. The fault ride through system 46 includes a solid state switch 52, a resistor 53, a mechanical switch 54 and a controller 56. Fault ride through system 46 is connected in series with generator 42 whereas components, solid state switch 52, resistor 53 and the mechanical switch 54 are all connected in parallel with each other. In one embodiment, solid state switch 52 may comprise an integrated gate commutated thyristor (IGCT), insulated gate bipolar transistor (IGBT) or Triode for Alternating Current (TRIAC). The controller 56 receives one or more input signals 58 and provides control signals to solid state switch 52, mechanical switch 54 and engine 60. In one embodiment, input signal 58 comprises one of a voltage signal, a current signal, a generator power signal, a speed signal, a rotor angle signal, an engine power signal, an engine torque signal or any combinations thereof. The controller uses input signal 58 to determine whether a fault has occurred on the system or not and provides control signals to control the operation of the engine 60, the solid state switch 52 and the mechanical switch 54 in event of the fault.

In operation, during normal conditions mechanical switch 54 is in a conducting or ON state whereas solid state switch 52 is in a non-conducting or OFF state. When there is a fault in the grid, the voltage at the point of connection (POC) 62 of the generator drops significantly. If the low voltage condition at the POC continues for a threshold time, generator 42 may be subjected to extremely high currents due to the large angle between a generator rotor and the grid. The generator would therefore disconnect from the grid to protect itself from these high currents. The growing angle between generator rotor and the grid could also lead to loss of synchronism between the generator and the grid, which will also require disconnecting the generator from the grid. However, to fulfill the grid code fault ride through requirements, the generator should be able to stay connected to the grid and continue supplying power to the grid after the fault is cleared and the voltage at the POC recovers to pre fault levels. In other words, during a fault condition the generator speed and rotor angle should stay within acceptable limits, as long as the voltage at the POC is above the voltage profile given by the grid code.

When a voltage drop at the POC due to a fault event in the power grid is detected by controller 56, it triggers engine 60 connected to generator 42 to reduce power (e.g. switch off engine ignition partially or fully) so as to reduce or stop generator 42 from accelerating, due to the limited electric power that the generator can supply to the grid during low voltage conditions at the POC. In certain cases, the stable operation of a gas engine is only possible if the ignition is not switched off for longer than a specific duration (e.g. one or more engine cycles), before it is switched on again. The fault ride through system 46 in accordance with the embodiment of the present technique enables such generator sets to fulfill grid code requirements, where the duration of the low voltage conditions, which the generator has to ride through, is longer than the maximum time the engine ignition can be kept switched off.

In one embodiment, at around same time when the controller 56 triggers engine 60 to reduce power due to the fault, mechanical switch 54 is also triggered to be switched off and solid state switch 52 is triggered to be switched on. As an example, while the solid state switch 52 can be switched on in a few microseconds, the switching off of the mechanical switch 54 would be in the range of milliseconds (e.g. 30ms to 100ms) after triggering.

Once mechanical switch 54 is in OFF state completely, the total current is redirected through the solid state switch 52, due its negligible on-resistance compared to the resistor 53. When the engine ignition is switched on again, controller 56 starts regulating the current flowing through resistor 53 by controlling the current flowing through solid state switch 52. This in a way results in adjustment of an effective resistance value of resistor 53 in series with the generator 42. By varying the effective value of resistor 53 in series with the generator 42, the generator acceleration, speed and rotor angle during fault can be regulated. In other words, during a fault condition and after the mechanical switch is opened the generator current is redirected to the solid-state switch and the resistor. Furthermore, the current through the resistor 53 is regulated by controlling the current through the solid state switch 52 and hence partially or completely dissipating the engine power in the resistor 53.

If the fault is cleared within a predetermined time and the voltage at the POC is back to acceptable level at which the generator can supply power to the grid, the engine ignition is switched back on, if still partially or fully off, and the mechanical switch 54 is triggered to be switched ON. At the same time, the solid state switch 52 can either be placed in a continuously ON position so as to short circuit resistor 53, or continue to be controlled by controller 56 for regulating the generator speed or rotor angle, as an example. Finally, when mechanical switch 54 is in ON state, solid state switch 52 is placed in OFF position by controller 56, bringing the fault ride through system 46 back to its initial state during normal conditions before the fault event. However, if the fault is not cleared within the predetermined time and the voltage at the POC is below the voltage profile given by the grid code then the engine is triggered to be fully switched off and disconnected from power grid 44, eventually resulting in no power supplied by generator 42 to power grid 44.

The active power consumed by resistor 53 during the fault depends on the voltage across the resistor and is generally given by Vr²/R, where Vr is the root mean square (RMS) voltage across the resistor and R is the resistance value of the resistor. Thus, if the Vr is 0.3 pu and R is 0.1 pu, then the power consumed by the variable resistor assuming solid state switch 52 is the OFF state would be 0.9 pu which is almost equivalent to the total power supplied by the generator. In other words, in this case resistor 53 could consume up to 90% of the power supplied by the engine to the generator and hence considerably reduce the generator acceleration during the low voltage condition. Thus, the generator is able to keep its rotational speed or rotor angle in an acceptable range and does not need to be disconnected from the grid during or after the fault.

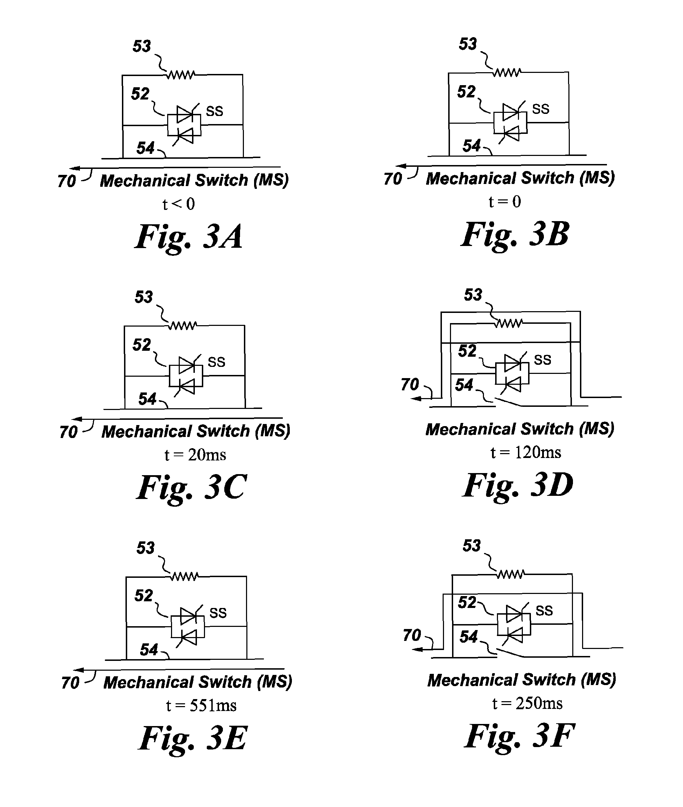

FIGs. 3(a)-3(f) show various stages of fault ride through operation according to aspects of the present disclosure. Fig. 3(a) shows a normal condition or no fault condition (t<0) where only mechanical switch 54 is conducting and solid state switch 52 is not conducting. During this stage, a generator current 70 flows only through mechanical switch 54 and not through solid state switch 52. Since mechanical switch 54 short circuits resistor 53, no current flows through resistor 53 either. At t=0 (Fig. 3(b)), a fault event occurs in the grid and at t=20ms (Fig. 3(c)), the fault event is detected by the fault ride through system. In one embodiment, the fault event may be detected if the voltage falls below a specified low value for a specified duration of time. In other embodiments, the fault event may be detected based on the voltage signal, current signal, speed signal, power signal, torque signal or rotor angle signal or any combinations thereof. As can be seen in Fig. 3(b) and Fig. 3(c), during these stages, generator current 70 still flows through mechanical switch 52 because control actions haven't been initiated. It should be noted that the timings shown here (i.e., t=0, 20, 120 ms etc.) are only for illustrative purposes and in other embodiments, the timings may be based on system and control parameters. Furthermore, at t=20ms when the fault event is detected by the fault ride through system, a first control signal is sent to the generator engine to partially or fully switch off its ignition and simultaneously or after a while a second control signal is sent to mechanical switch 54 to open it. A third control signal to switch on solid state switch 52 may also be sent at t=20ms or with some delay, since a switch on time of solid state switch 52 is much shorter compared to a switch off time of mechanical switch 54. The solid state switch 52 should however be switched on well before mechanical switch 54 is completely switched off. During this time, generator current 70 may flow both through solid state switch 52 and mechanical switch 54.

Fig. 3(d) shows that at t=120ms, mechanical switch 54 is switched off completely and solid state switch 52 is switched on. In one embodiment, the engine ignition is also commanded to be switched on after the mechanical switch 54 is fully open. This is generally done in the embodiment, where the engine ignition can not to be switched off for a longer duration (e.g., one or more engine cycles). In one embodiment, a conduction time of solid state switch 52 is controlled. In other words, the current through the solid state switch 52 is controlled and the remaining generator current 70 flows through the resistor 53. The amount of power dissipated in the resistor 53 can therefore be controlled by controlling the solid-state switch. The objective of the controller 56 is, as an example, regulating the generator speed to a nominal synchronous speed. This is achieved by varying the amount of "braking power" dissipated in the resistor 53. Another control objective of the controller 56 could be regulating the rotor angle of the synchronous generator or the electrical power supplied to the grid at the POC.

If the fault is cleared before a predetermined time e.g., t=250 ms, the controller sends a first control signal to the engine to fully switch on its ignition, in case still partially or fully switched off, and simultaneously a second control signal is sent to the mechanical switch 54 to trigger closing it. Controller 56 continues controlling the solid state switch 52 until the mechanical switch 54 is fully closed at e.g. t=551ms. The solid state switch 52 is then switched off and the normal operating condition before the fault event is restored, as shown in Fig. 3(e).

If the fault is still not cleared at a predetermined time, e.g. t=250ms, or the voltage at the POC is below the voltage profile given by the grid code, the engine is triggered to be fully switched off. The solid state switch 52 is simultaneously or after a while (e.g., after generator stops rotating) triggered to switch off and the current 70 flows only through the resistor 53, as shown in Fig. 3(f), and the engine power is fully or partially dissipated in the resistor until eventually the engine 60 is switched off and disconnected from the grid.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A power generation system (40) comprising:
a generator (42) mechanically coupled to an engine (60) to generate electrical power;
a fault ride through system (46) connected between the generator (42) and a power grid (44), the fault ride through system (46) comprising a mechanical switch (54) connected in parallel with a solid state switch (52) and a resistor (53) to absorb power from the generator during a grid fault condition;
wherein the mechanical switch (54) and the solid state switch (52) are controlled in coordination with the engine (60).

2. The system of claim 1 further comprising a controller (56) to generate a first control signal to control the mechanical switch (54), a second control signal to control the ignition of the engine and a third control signal to control the solid state switch (52) when the grid fault condition is detected.

3. The system of claim 2, wherein the controller (56) is configured to switch off the mechanical switch (54) when the grid fault is detected and to switch on the mechanical switch (54) if the fault is cleared after a predetermined time.

4. The system of claim 3, wherein the controller (56) is configured to switch off the solid state switch (52) if the fault condition is cleared after the predetermined time.

5. The system of claim 3, wherein the controller (56) is configured to partially or fully switch off the ignition of the engine (60) for a specified time when the fault is detected.

6. The system of claim 5, wherein the controller (56) is configured to keep the mechanical switch (54) and the solid state switch (52) in a non-conducting state if the fault condition is not cleared at the predetermined time and the generator (42) comes to a standstill.

7. The system of claim 2, wherein the controller (56) is configured to detect the fault condition based on an input signal (58).

8. The system of claim 7, wherein the controller (56) controls the solid state switch (52) and the engine (60) based on the input signal (58).

9. The system of claim 8, wherein the input signal (58) comprises one of a voltage signal, a current signal, a generator power signal, a speed signal, a rotor angle signal, an engine power signal, a torque signal or any combinations thereof.

10. A method of supplying electrical power to a power grid (44) from a power generation system (40) comprising a fault ride through system (46) connected between a generator (42) and the power grid (44), the fault ride through system (46) comprising a mechanical switch (54) connected in parallel with a solid state switch (52) and a resistor (53), the method comprising:
controlling the mechanical switch (54) to open when a fault is detected and to close the mechanical switch (54) if the fault is cleared after a predetermined time;
providing a bypass path for a generator current via the solid state switch (52) or the resistor (53) after the mechanical switch (54) is opened and before the predetermined time; and
controlling ignition of an engine (60) coupled to the generator (42) in coordination with the solid state switching.

11. The method of claim 10, further comprising partially or fully switching off the ignition of the engine (60) for a specified time when the fault is detected.

12. The method of claim 10 or 11, further comprising switching off the mechanical switch (54) and the solid state switch (52) if the fault is not cleared after the predetermined time and the generator (42) comes to a standstill.

13. The method of any of claims 10 to 12, further comprising controlling the solid state switch (52) to regulate a speed or a rotor angle of the generator (42) by varying current through the resistor (53).

14. The method of any of claims 10 to 13, wherein the fault is detected based on an input signal (58).

15. The method of claim 14, wherein the solid state switch (52) and the engine (60) are controlled based on the input signal (58).
